(19) Europäisches Patentamt
European Patent Office
Office européen des brevets

(11) Publication number: **0 178 036**
**A1**

# (12) EUROPEAN PATENT APPLICATION

(21) Application number: **85303690.3**

(22) Date of filing: **24.05.85**

(51) Int. Cl.⁴: **H 01 M 10/26**

(30) Priority: **15.06.84 US 620910**

(43) Date of publication of application: **16.04.86**
**Bulletin 86/16**

(84) Designated Contracting States: **AT BE CH DE FR GB IT LI LU NL SE**

(71) Applicant: **OVONIC BATTERY COMPANY,**
**1826 Northwood Drive, Troy Michigan 48084 (US)**

(72) Inventor: **Mani, Balaraman, 5 Demond Place, Somerville New Jersey, 08876 (US)**
Inventor: **deNeufville, John Philip, R.D. 1 Indian Hollow Road, Mendham New Jersey 07945 (US)**

(74) Representative: **Skone James, Robert Edmund et al,**
**GILL JENNINGS & EVERY 53-64 Chancery Lane, London WC2A 1HN (GB)**

(54) **Improved electrolytes containing vanadium for electrochemical cells.**

(57) The present invention includes an electrolyte for electrochemical cell which contains an alkaline solution and vanadium component. Preferably, the alkaline solution includes an alkali hydroxide selected from a group consisting of lithium hydroxide, sodium hydroxide, potassium hydroxide, and any combination thereof. The vanadium component is an oxide of vanadium or a compound of pentavalent vanadium which is soluble and stable in the alkaline solution. The electrolyte may be used in the fabrication of cells and batteries. Several methods of preparing the electrolyte and using the electrolyte in an electrochemical cell also are provided.

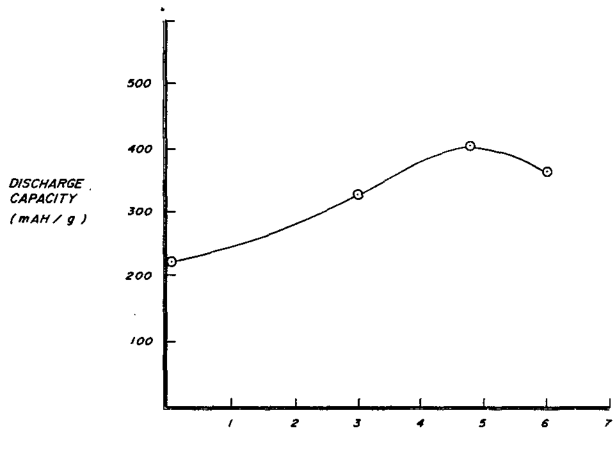


EP 0 178 036 A1

IMPROVED ELECTROLYTES CONTAINING VANADIUM FOR ELECTROCHEMICAL CELLS

The present invention is directed generally to an improved electrolyte for use in a rechargeable electrochemical cell. More particularly, the electrolyte includes a vanadium component dissolved in an alkaline solution.

It is commonly known that rechargeable alkaline battery systems have many advantages which include long cycle life, high charge and discharge rates, and favorable discharge characteristics at low temperatures. By virtue of these advantages, the rechargeable alkaline battery has been finding increasing applications in many fields of industry. These advantages are derived from the fact that the plaque commonly used as the active material support has a high porosity as well as a small thickness. The active material can be filled in a laminary developed state in the surface of the nickel plaque which has a large surface area. Thus, the electrode has a low ohmic resistance and a small degree of polarization.

One of the problems that face battery manufacturers is to improve the electrochemical performance of the battery to meet the demands of an increasingly varied number of applications. The criteria considered in developing these batteries demand that the specific energy and power and their volumetric counterparts, energy and power density, be sufficiently great in small cells to withstand the inevitable discounts resulting from scale-up, packaging for safety, etc. The calendar and cycle life also must be adequate. Material cost must be in accord with use markets. Safety and environmental hazards must be kept at a minimum.

Although this application focuses upon one of the most widely used rechargeable alkaline battery systems, namely the nickel-cadmium cell, the present invention improves the performance of positive electrodes of which utilize a reversibly oxidizable cation species in other rechargeable systems as well. Furthermore, the present invention finds

application to cells utilizing various types of negative electrodes and negative electrode charge storage mechanisms such as a hydrogen storage electrode.

In a conventional nickel-cadmium cell, the positive electrode consists of a porous nickel plaque impregnated by chemical or electrochemical methods with active material (cobalt-activated nickel hydroxide). Plaque density can be reduced to increase specific energy and lower cost, but only at the expense of reducing cycle life. A significant limitation on the energy and power density of such a cell lies in the chemical reactions present at the cathode, namely the nickel hydroxide electrode. While the first level of oxidation represented by Equation 1:

$$(1) \qquad OH^{-} + Ni(OH)_2 \rightarrow NiOOH + H_2O + e-$$

is easily achieved and forms the basis for the generally accepted theoretical electrode capacity of 289 mAH/g of nickel hydroxide, the second level of oxidation represented by Equation 2:

$$(2) \qquad OH \ + NiOOH \rightarrow NiO_2 + H_2O + e-.$$

occurs at a potential which is more positive than the reaction present in the electrolyte of the cell represented by Equation 3:

$$(3) \qquad 2OH^{-} \rightarrow H_2O + 1/2\ O_2 + 2e-.$$

The first equation is in the potential range of about 0.34 to 0.44 volts versus the Hg/HgO reference electrode in the same solution. The second equation is in the potential range of about 0.45 to 0.65 volts according to the type of electrode and the current load. The reaction present in the electrolyte tends to dominate at most reasonable current densities and limit the electrode capacity. The result is an irreversible dissociation of the electrolyte and the formation of gas. Thus, the second level of cathode oxidation represented by Equation 2 is not generally available

for charge storage so the cathode capacity is limited to storing one electron per molecule of active material as expressed by Equation 1.

Extensive research efforts have concentrated on bettering performance of the nickel hydroxide electrode through modification of the electrolyte. The results, however, have been marginal. Additionally, the modifications occasionally decreased the discharge capacity or otherwise deleteriously poisoned the nickel hydroxide electrode. An extensive list of the electrolyte modifications attempted is reported in "Proceedings of the Symposium on the Nickel Electrode," by Gunther, et al. Volume 82-4. The list of additives does not include any vanadium compounds as utilized by the present invention.

In particular, lithium hydroxide has been added to potassium hydroxide to promote an exchange reaction between the lithium ion and protons in the crystal lattice of the nickel hydroxide electrode. This was reported in "The Review of the Structure and the Electrochemistry of Nickel Hydroxide and Oxy-Hydroxide" P. Oliva et al. Journal of Power Sources 8 (1982) page 229-255. Furthermore, the alkaline electrolyte containing lithium as an additive was used with extreme caution since, depending on experimental conditions, it could poison the operation of the nickel hydroxide electrode. With increasing concentrations of lithium in the electrolyte, lithium nickelate was formed which displays a low discharge potential and exhibits poor reversibility especially at low temperatures.

In accordance with the present invention, the electrochemical performance of conventional nickel hydroxide electrodes in nickel cadmium cells and other positive electrodes is improved by releasing more than one electron per molecule of active material to achieve a full state of charge and by decreasing the operating potential of the electrode oxidation

reactions for a given state of charge through use of the inventive electrolyte. Cells and batteries using the inventive electrolyte exhibit increased discharge capacity which is reproducible over the cycle life when compared to conventional electrolytes. The energy requirement and evolution of heat by such cells during continuous overcharge also would be dramatically reduced. Furthermore, an improvement in charge retention time for cells and batteries utilizing the present invention can be expected.

The present invention includes an electrolyte for electrochemical cell which contains an alkaline solution and vanadium component. The problems with prior art attempts to improve the performance of electrochemical cells discussed above are obviated by the present invention resulting in superior electrochemical performance.

Preferably, the alkaline solution includes an alkali hydroxide selected from a group consisting of lithium hydroxide, sodium hydroxide, potassium hydroxide, and any combination thereof. The vanadium component is an oxide of vanadium or a compound of pentavalent vanadium which is soluble and stable in the alkaline solution.

The present invention also provides for an electrochemical cell including at least one anode means for reversibly storing charge at a negative potential relative to a Hg/HgO reference. The cell also includes at least one cathode for reversibly storing charge at a positive potential relative to a Hg/HgO reference. The cathode is positioned in the cell and spaced in operative contact with the anode. The cell also includes an electrolyte in operative contact with the anode and cathode. The electrolyte includes an alkaline solution and a vanadium component. The cell also includes a casing having the electrolyte, anode, and cathode positioned therein. Preferably, the electrolyte is of the composition described above.

Several methods of using an electrolyte in an electrochemical cell are provided herein. The cell utilizes an active material having a reversibly oxidizable cation species which releases electrons through successive oxidation reactions. The method includes the step of providing an alkaline electrolyte solution incorporating a vanadium component. Preferably, the electrolyte is of the composition discussed above. One embodiment of the methods includes decreasing the potential of the oxidation reactions for a given state of charge. A second embodiment of the methods includes releasing more than one electron per molecule of the active material to achieve a full state of charge.

A method of making an electrolyte for use in an electrochemical cell is also provided. The method includes providing an alkaline solution and dissolving a vanadium component to uniformly disperse the vanadium throughout the solution.

Accordingly, a first object of the invention is to provide an electrolyte for a rechargeable electrochemical cell. The electrolyte is characterized by an alkaline solution containing a vanadium component in an amount effective to increase the capacity of the electrochemical cell for reversibly storing energy.

A second object of the invention is to provide an electrochemical cell which includes at least one anode for reversibly storing charge at a negative potential relative to an Hg/HgO reference and at least one cathode for reversibly storing charge at a positive potential relative to Hg/HgO reference. The cathode is positioned in the cell and spaced in operative contact with the anode. An electrolyte is in operative contact with the anode and the cathode. A casing contains the electrolyte, anode and cathode positioned therein. The electrolyte is characterized by an alkaline solution and a vanadium

component in an amount effective to increase the capacity of the electrochemical cell for reversibly storing energy.

A third object of the invention is to provide a method of making an electrolyte for use in a rechargeable electrochemical cell. The method includes the steps of providing an alkaline solution and is characterized by dissolving a vanadium component in the solution in an amount effective to increase the capacity of the electrochemical cell for reversibly storing energy.

The preferred embodiment of this invention will now be described by way of example, with reference to the drawings accompanying this specification in which:

Figure 1 is a graph of discharge capacity versus the percentage of vanadium oxide in a cell having an inventive electrolyte;

Figure 2 is a graph of electrode potential during discharge in volts (versus Hg/HgO) versus discharge capacity comparing nickel cadmium cells having an inventive electrolyte with a conventional electrolyte; and

Figure 3 is a graph of discharge capacity versus cycle life comparing nickel cadmium cells having varying concentrations of an inventive electrolyte with a conventional electrolyte.

The present invention improves the performance of electrochemical cells by utilizing an electrolyte which contains a vanadium compound. It is believed that the inventive electrolyte decreases the potential of the cathode so that it accepts more coulombs during charging before its potential value rises to the oxygen evolution potential value. Even though oxygen evolution potential for the electrode is lowered, the cathode still accepts more coulombs during charging before reaching the oxygen evolution potential.

In particular, the electrolyte of the present invention provides an alkaline solution to which a vanadium compound

has been added. Various compounds of vanadium are suitable. In particular, the oxides of vanadium and compounds of pentavalent vanadium which are soluble and stable in an alkaline solution are particularly advantageous. The preferred vanadium oxide is vanadium pentoxide. Preferably, the vanadium is uniformly dispersed throughout the electrolyte.

For small additions of a vanadium compound, in particular vanadium pentoxide, the discharge capacity of an electrochemical cell increases with increasing vanadium concentration. A concentration of the vanadium in a range greater than about 1% and less than about 8% by weight is suitable. Advantageously, vanadium present in the range of 4% to about 6% by weight may be used. Preferably, vanadium present in an amount of about 5% by weight exhibits the highest increase in discharge capacity with nickel cadmium electrochemical cells.

Various types of alkaline solutions are suitable for use as a component of the electrolyte. It is preferred that the solution be aqueous based. Suitable types of alkaline compounds used for forming the alkaline solution include the alkali metal hydroxides. For the conventional potassium hydroxide aqueous electrolyte, a concentration in the range of 1 M to 5.5 M is preferred. Mixtures of potassium hydroxide with lithium hydroxide may also be used wherein the preferred solution would contain a concentration of about 1 M of lithium hydroxide.

The present invention also contemplates an electrochemical cell which includes at least one anode for reversibly storing charge at a negative potential relative to a Hg/HgO reference. At least one cathode also is included for reversibly storing charge at a positive potential relative to a Hg/HgO reference. The cathode is positioned in the cell and spaced in operative contact with the anode. The cell also includes an electrolyte of the

composition previously discussed herein. The cell also includes a casing with the electrolyte, anode, and cathode positioned therein. A plurality of these cells may be assembled to produce a battery.

A variety of negative electrodes or anodes are compatible for use with the invention. Commonly used anode materials like cadmium, iron, and activated carbon would make little difference in the significant improvements in performance observed with the positive electrode used. Other alkaline battery systems which use different negative electrode charge storage mechanisms such as a hydrogen storage electrode also are compatible with the present invention.

Although the positive electrode or cathode discussed throughout this application utilizes an active material of nickel hydroxide or cobalt-activated nickel hydroxide, the invention is not as limited. Other suitable active materials for the positive electrode include bismuth oxide, transition metal oxides other than nickel hydroxide, and combinations of these active materials. Since the cobalt-activated nickel hydroxide electrode is widely used, however, it is the basis for comparison to demonstrate significant improvement in performance of positive electrodes and their corresponding electrochemical cells utilizing the inventive electrolytes.

The present invention also contemplates method of making the electrolyte which includes the step of providing an alkaline solution of the type discussed herein. Either subsequent to or simultaneously with the preparation of the alkaline solution, a vanadium component is dissolved in the solution so as to obtain a uniform distribution of the vanadium throughout the solution.

Several methods of using an electrolyte in a rechargeable electrochemical cell having an aqueous electrolyte are contemplated by the invention. The methods include

providing an active material having a reversible oxidizable cation species which releases electrons through successive oxidation reactions. One embodiment releases more than one electron per molecule of the active materials to achieve a full state of charge. A second embodiment decreases the operating potential of the reactions oxidizing the active material for a given state of charge. Preferably, the electrolyte uses an alkaline solution and vanadium component of the type described herein.

## EXAMPLE

A comparative test of the discharge characteristics between the present invention and nickel cadmium cells using conventional electrolyte was made by preparing four cells with nickel hydroxide electrodes (NOE) from the Aliance Tool Company. These electrodes were prepared by a conventional process chemically percipitating nickel hydroxide in the pores of a sintered nickel plaque. The size of the positive electrodes was about 1.0 inch by 1.25 inch by 0.03 inch. The amount of active material in the NOE was measured at about 0.88 grams per electrode. A reference electrode of Hg/HgO was used during the test.

The electrodes were tested in a flooded cell configuration using cadmium anodes supplied by the Alliance Tool Company. These cells were prepared with excess cadmium anode capacity so that their discharge capacity would be limited by the capacity of the nickel hydroxide cathode. Each of the electrodes was tested in the same manner except for the electrolyte used. The standard electrode (NOE) used a conventional 5.5 M KOH electrolyte. The other three inventive electrodes (VNOE) were tested with varying concentrations of vanadium pentoxide in the conventional electrolyte as measured by weight percent: 2.98%,; 4.85%; 5.95%.

The capacities of the VNOEs using vanadium pentoxide in the electrolyte are shown in Figure 1. As the concentration of the vanadium in the electrolyte increased the discharge capacity of the positive electrode increased to a maximum and then declined as the solubility limit was approached. A preferred concentration of vanadium pentoxide appears to be in the 4.5 to 5.5 weight percent range.

Each cell was cycled with a 30 mA charge and a 40 mA discharge. Figure 2 displays the discharge characteristics of the 4.85 weight percent VNOE in comparison to the standard NOE. The graph of electrode potential in volts (versus Hg/HgO) versus discharge capacity was taken on the 40th cycle for the standard NOE and on the 42nd cycle for the inventive VNOE. This comparison dramatically indicates a two-fold increase in discharge capacity. The mid-discharge voltage versus Hg/HgO of the NOE and VNOE were 0.34 and 0.34 volts, respectively.

One also observes that the charge potential at a fixed state of charge and rate of charge current of the inventive VNOE is lower than that of the conventional NOE. The oxygen evolution potential, the charge potential, and the discharge potential of the VNOEs decreased with increasing concentration of the vanadium pentoxide.

Figure 3 exhibits the capacity of the test of the electrodes tested versus cycles. The cells with 2.98 and 5.5 weight percent of vanadium pentoxide are cycling reproducibly at 100 cycles as of this application's filing. The inventive VNOEs clearly demonstrate a reproducible advantage over the conventional NOE.

As illustrated by these examples, a number of other advantages results from the use of the inventive electrolyte. For example, the discharge capacity increases two-fold over conventional electrolyte in nickel cadmium cells. This significant improvement is reproducible over the cycle life.

It is believed from the data that the potential of the oxidation reactions for the active material in the cathode have been lowered. Even the open circuit voltage at a given state of charge is reduced by the present invention. The data indicate that the energy requirement and heat evolution from the cell on continuous overcharge would be dramatically reduced. Additionally, the charge retention time of a cell or battery would be increased. All of the above factors improve electrochemical performance of a cell utilizing the present invention.

Modifications and variations of the present invention are possible in light of the above teachings. It is, therefore, to be understood that within the scope of the appended claims the invention may be practiced otherwise than is specifically described.

CLAIMS

1. An electrolyte for a rechargeable electrochemical cell, said electrolyte characterized by an alkaline solution containing a vanadium component in an amount effective to increase the capacity of the electrochemical cell for reversibly storing energy.

2. An electrolyte according to claim 1, further characterized by said vanadium component being an oxide of vanadium.

3. An electrolyte according to claim 2, further characterized by said oxide of vanadium being vanadium pentoxide.

4. An electrolyte according to claim 1, further characterized by said vanadium component being present in an amount of about 5% by weight.

5. An electrolyte according to claim 1, further characterized by said solution including a hydroxide.

6. An electrochemical cell including at least one anode for reversibly storing charge at a negative potential relative to a Hg/HgO reference; at least one cathode for reversibly storing charge at a positive potential relative to a Hg/HgO reference, said cathode positioned in said cell and spaced in operative contact with said anode;

an electrolyte in operative contact with said anode and said cathode, a casing having said electrolyte, said anode, and said cathode positioned therein, said electrolyte characterized by an alkaline solution and a vanadium component in an amount effective to increase the capacity of said electrochemical cell for reversibly storing energy.

7. A cell according to claim 6, further characterized by said vanadium component being an oxide of vanadium.

8. A cell according to claim 7, further characterized by said oxide of vanadium being vanadium pentoxide.

9. A cell according to claim 6, further characterized by said vanadium component being present in an amount of about 5% by weight.

10. A cell according to claim 6, further characterized by said solution including a hydroxide.

11. A cell according to claim 6, further characterized by said anode including an element selected from the group of carbon, iron and cadmium.

12. A cell according to claim 6, further characterized by said anode including a hydrogen storage material.

13. A cell according to claim 6, further characterized by said cathode including à transition metal oxide.

14. A cell according to claim 6, further characterized by said cathode including a material selected from a group consisting of bismuth oxide, nickel hydroxide, cobalt-activated nickel hydroxide and any combination thereof.

15. A battery characterized by a plurality of cells according to claim 6.

16. A method of making an electrolyte for use in a rechargeable electrochemical cell, said method including the steps of providing an alkaline solution; and characterized by dissolving a vanadium component in said solution in an amount effective to increase the capacity of said electrochemical cell for reversibly storing energy.

17. A method according to claim 16, further characterized by said vanadium component being an oxide of vanadium.

18. A method according to claim 17, further characterized by said oxide of vanadium being vanadium pentoxide.

19. A method according to claim 16, further characterized by said vanadium component being present in an amount of about 5% by weight.

20. A method according to claim 16, further characterized by said solution including a hydroxide.

AMENDED CLAIMS

CLAIMS

1. An electrolyte for a rechargeable electrochemical cell, the electrolyte comprising an alkaline solution containing a vanadium component in an amount greater than about 1% and less than about 8% by weight for increasing the capacity of the electrochemical cell for reversibly storing energy.

2. An electrolyte according to claim 1, wherein the vanadium component includes a compound of pentavalent vanadium which is soluble and stable in the alkaline solution.

3. An electrolyte according to claim 1, wherein the vanadium component is an oxide of vanadium.

4. An electrolyte according to claim 3, wherein the oxide of vanadium is vanadium pentoxide.

5. An electrolyte according to any of the preceding claims, wherein the vanadium component is present in an amount greater than about 4% and less than 6% by weight.

6. An electrolyte according to claim 5, wherein the vanadium component is present in an amount of about 5% by weight.

7. An electrolyte according to any of the preceding claims, wherein the solution further comprises water.

8. An electrolyte according to any of claims 1 to 6, wherein the solution further comprises a hydroxide.

9. An electrolyte for an electrochemical cell, the electrolyte comprising an aqueous solution containing an alkali hydroxide and vanadium pentoxide present in an amount greater than about 1% and less than about 8% by weight to increase the capacity of the electrochemical cell for reversibly storing energy.

10. An electrolyte according to claim 9, wherein the vanadium component is present in an amount of about 5% by weight.

AMENDED CLAIMS

11. An electrolyte according to claim 9 or claim 10, wherein the alkali hydroxide is selected from a group consisting of lithium hydroxide, sodium hydroxide, potassium hydroxide, and any combination thereof.

12. An electrochemical cell comprising at least one anode for reversibly storing charge at a negative potential relative to a Hg/HgO reference; at least one cathode for reversibly storing charge at a positive potential relative to a Hg/HgO reference, the cathode being positioned in the cell and spaced in operative contact with the anode; an electrolyte according to any of the preceding claims in operative contact with the anode and the cathode; and a casing having the electrolyte, the anode, and the cathode positioned therein.

13. A cell according to claim 12, wherein the anode comprises an element selected from the group of carbon, iron and cadmium.

14. A cell according to claim 12, wherein the anode comprises a hydrogen storage material.

15. A cell according to any of claims 12 to 14, wherein the cathode comprises a transition metal oxide.

16. A cell according to any of claims 12 to 14, wherein the cathode comprises a material selected from a group consisting of bismuth oxide, nickel hydroxide, cobalt-activated nickel hydroxide and any combination thereof.

17. A cell according to claim 16, when dependent on claim 13, wherein the anode comprises cadmium and the cathode comprises nickel hydroxide material.

18. A cell according to claim 17, wherein the cathode includes a hydrogen storage material as an active material.

19. A battery comprising a plurality of cells according to any of claims 12 to 18.

AMENDED CLAIMS

20. A method of making an electrolyte for use in a rechargeable electrochemical cell, the method comprising the steps of providing an alkaline solution; and dissolving a vanadium component in the solution in an amount greater than about 1% and less than about 8% by weight to increase the capacity of the electrochemical cell for reversibly storing energy.

21. A method according to claim 20, wherein the vanadium component includes compounds of pentavalent vanadium which are soluble and stable in the alkaline solution.

22. A method according to claim 20, wherein the vanadium component is an oxide of vanadium.

23. A method according to claim 22, wherein the oxide of vanadium is vanadium pentoxide.

24. A method according to any of claims 20 to 23, wherein the vanadium component is present in an amount of about 5% by weight.

25. A method according to any of claims 20 to 24, wherein the solution further comprises water.

26. An method according to any of claims 20 to 24, wherein the solution further comprises a hydroxide.

27. A method of using an electrolyte in a rechargeable electrochemical cell, the cell utilising a cathode comprising an active material having a reversibly oxidisable cation species which releases electrons through successive oxidation reactions, said method comprising the steps of providing an electrolyte including an alkaline solution incorporating a vanadium component; and decreasing the potential of said oxidation reactions for a given state of charge.

28. A method as defined in claim 27, wherein said potential decreasing step further comprises releasing more than one electron per molecule of said active material to achieve a full state of charge.

AMENDED CLAIMS

29. A method of using an electrolyte in a rechargeable electrochemical cell said cell utilising an active material having a reversibly oxidisable cation species which releases electrons through successive oxidation reactions, said method comprising the steps of providing an electrolyte including an alkaline solution incorporating a vanadium component; and releasing more than one electron per molecule of said active material to achieve a full state of charge.

30. A method as defined in claim 29, wherein said electron releasing step further comprises decreasing the potential of said oxidation reactions for a given state of charge.

29. A method of using an electrolyte in a rechargeable electrochemical cell said cell utilising an active material having a reversibly oxidisable cation species which releases electrons through successive oxidation reactions, said method comprising the steps of providing an electrolyte including an alkaline solution incorporating a vanadium component; and releasing more than one electron per molecule of said active material to achieve a full state of charge.

30. A method as defined in claim 29, wherein said electron releasing step further comprises decreasing the potential of said oxidation reactions for a given state of charge.

31. An electrolyte according to claim 1, wherein the vanadium component is present in an amount greater than about 2% and less than about 8% by weight.

32. An electrolyte according to claim 9, wherein the vanadium component is present in an amount greater than about 2% and less than about 8% by weight.

33. A method according to claim 20, wherein the vanadium component is present in an amount greater than about 2% and less than about 8% by weight.

FIG I

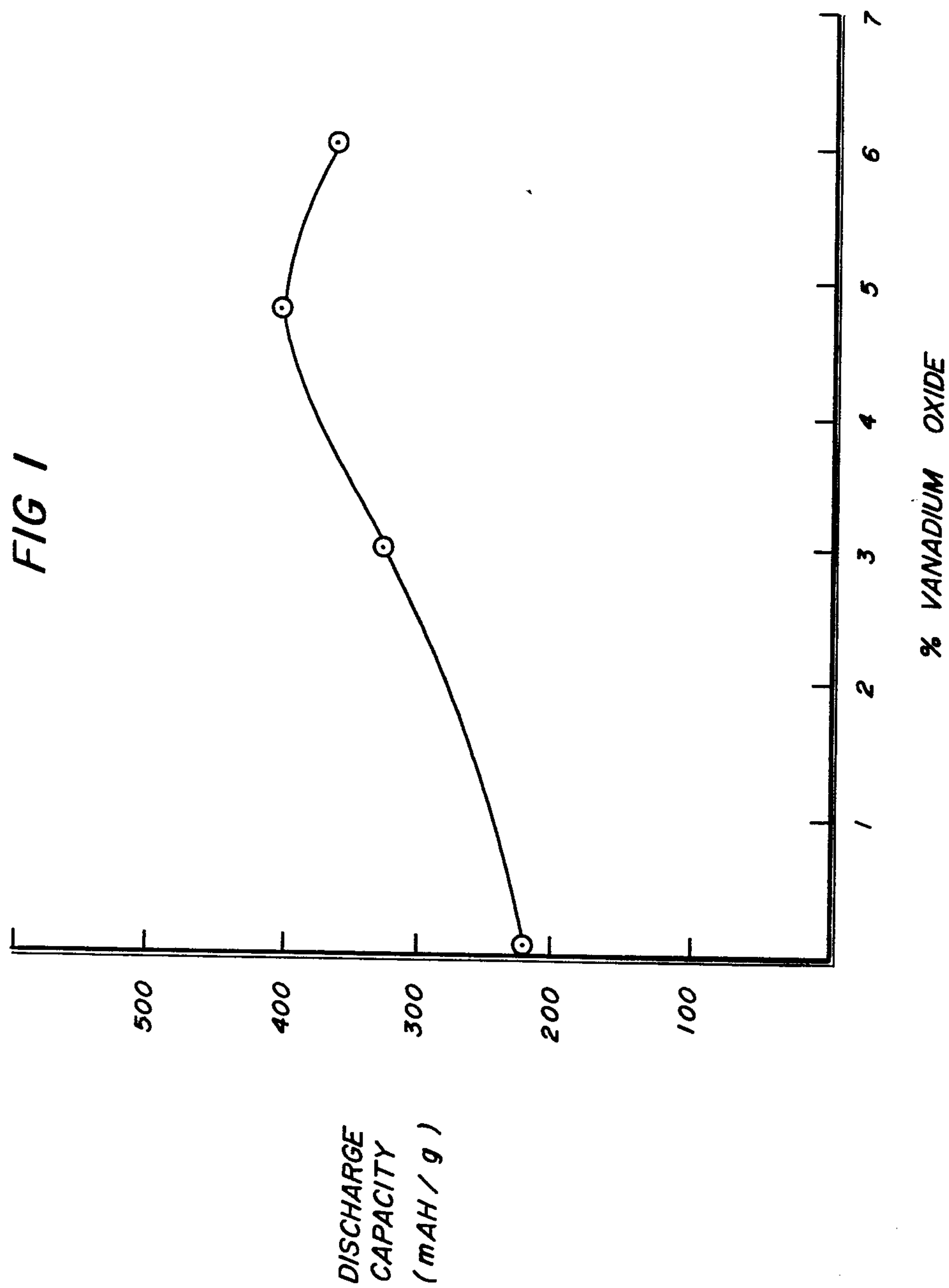
DISCHARGE CAPACITY (mAH / g)
500
400
300
200
100
1
2
3
4
5
6
7
% VANADIUM OXIDE

FIG 2

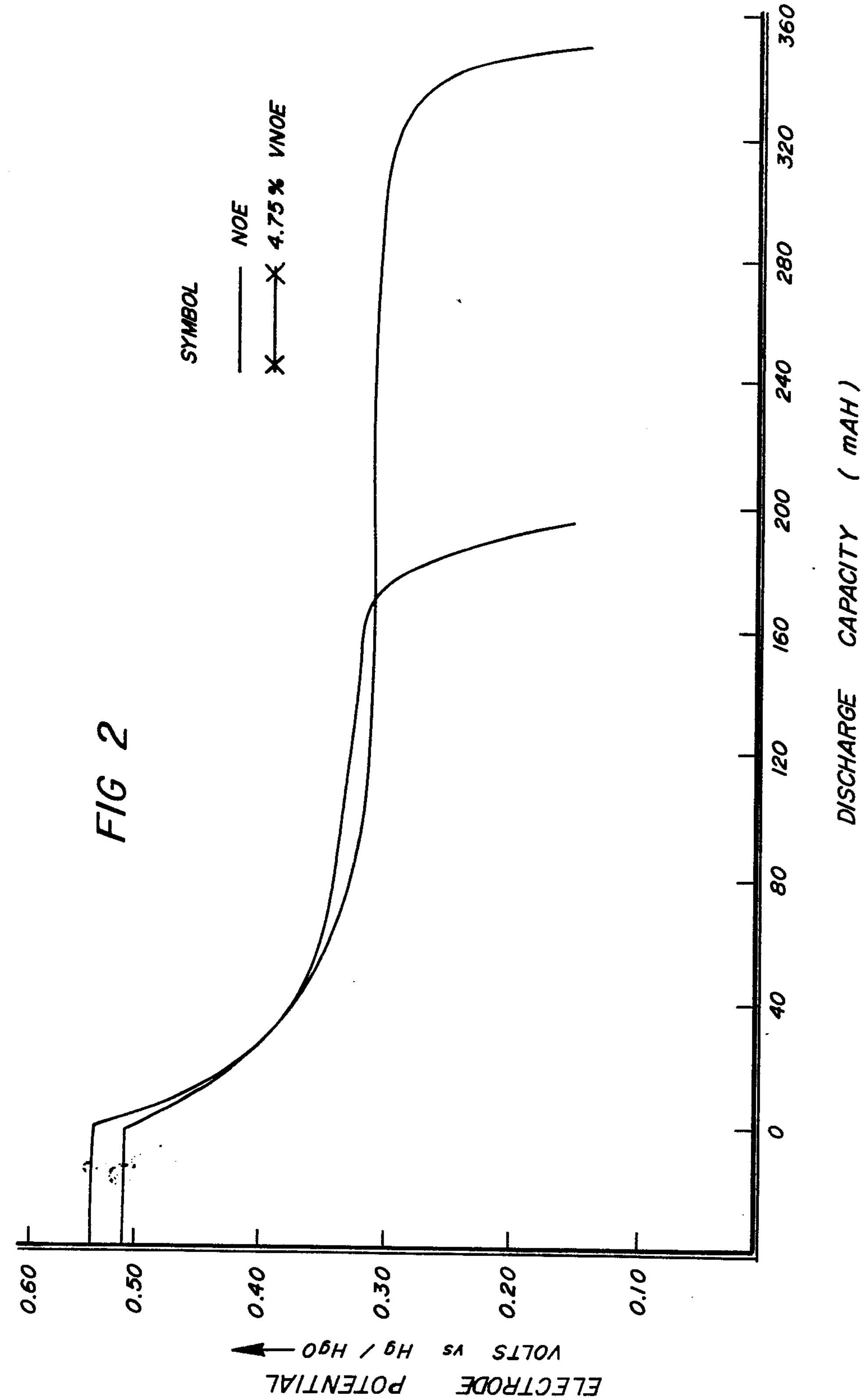
SYMBOL
NOE
4.75 % VNOE
0.60
0.50
0.40
0.30
0.20
0.10
ELECTRODE POTENTIAL
VOLTS vs Hg / HgO
0
40
80
120
160
200
240
280
320
360
DISCHARGE CAPACITY ( mAH )

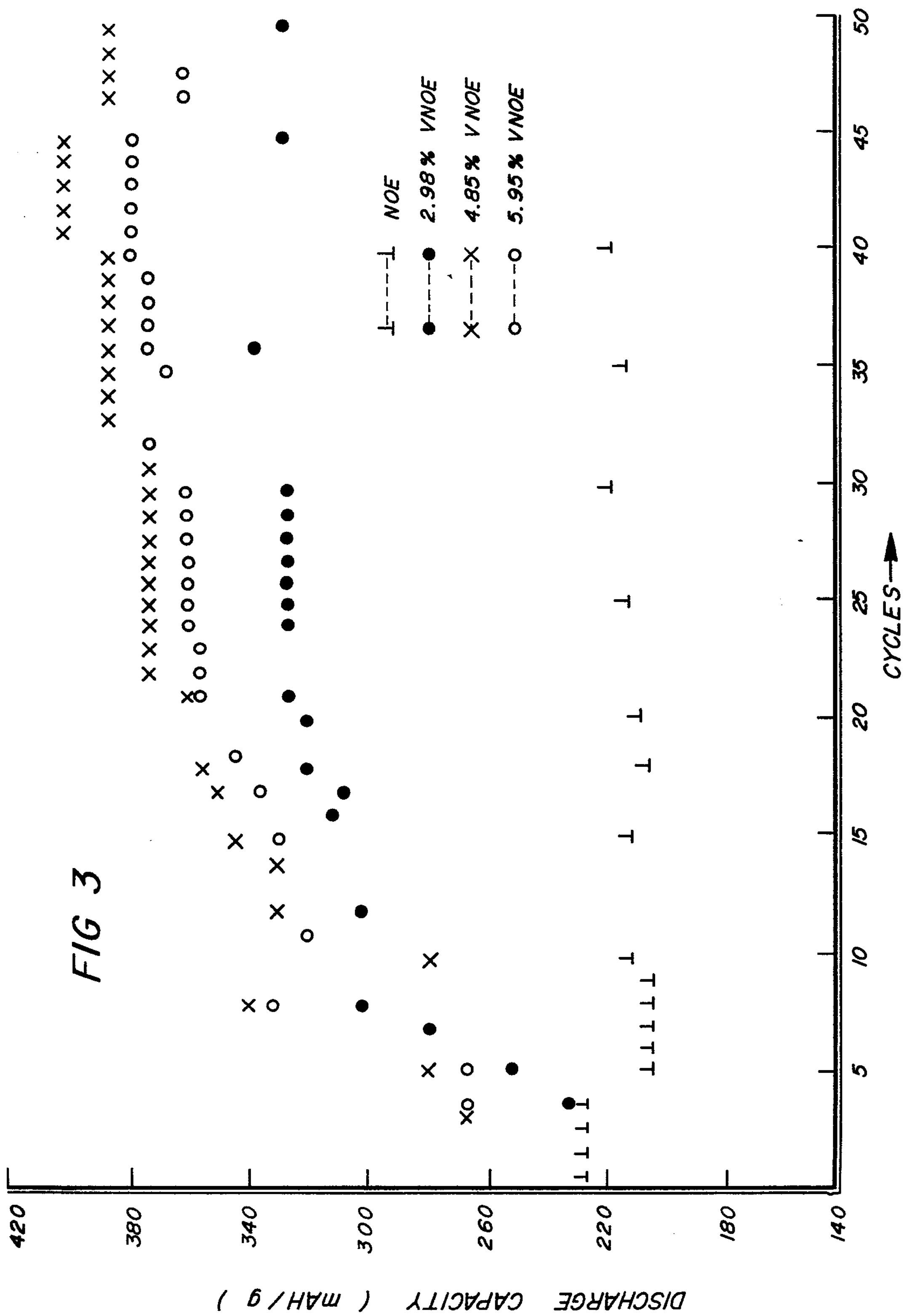
NOE
2.98 % VNOE
4.85 % V NOE
5.95 % VNOE
DISCHARGE CAPACITY ( mAH / g )
420
380
340
300
260
220
180
140
CYCLES
5
10
15
20
25
30
35
40
45
50

FIG 3

0178036

European Patent Office

# EUROPEAN SEARCH REPORT

Application number

EP 85 30 3690

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 90, no. 22, 1979, page 177, ref. 171465t, Columbus, Ohio, US; POA, SHAN-PING et al.: "Research and development of the nickel-zinc secondary battery. Part I. Study and improvement of the zinc electrode shape change in the nickel-zinc battery" & K'O HSUEH FA CHAN YUEH K'AN 1978, 6(11), 1013-34 | 1-3,5, 6-8,10 ,13,14 ,16-18 ,20 | H 01 M 10/26 |
| X | CHEMICAL ABSTRACTS, vol. 83, 1975, page 196, no. 150324m, Columbus, Ohio, US; & JP - A - 75 28 640 (AGENCY OF INDUSTRIAL SCIENCES AND TECHNOLOGY) 24-03-1975 | 1-3,5, 6-8,10 ,16-18 ,20 | |
| | | | TECHNICAL FIELDS SEARCHED (Int. Cl.4) |
| X | FR-A-2 191 290 (DEUTSCHE AUTOMOBIL GmbH)<br><br>* Page 1; page 2, lines 1-12; claims 1,3 * | 1,5,6, 10,12, 13,14, 16,20 | H 01 M 10/26<br>H 01 M 10/02 |
| X | FR-A-1 230 664 (YARDNEY)<br><br>* Page 1 * | 1,5,6, 10,13, 14,16, 20 | |
| | --- -/- | | |

The present search report has been drawn up for all claims

| Place of search | Date of completion of the search | Examiner |
|---|---|---|
| THE HAGUE | 12-09-1985 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

0178036

European Patent Office

**EUROPEAN SEARCH REPORT**

Application number

EP 85 30 3690

**DOCUMENTS CONSIDERED TO BE RELEVANT**

Page 2

| Category | Citation of document with indication, where appropriate, of relevant passages | Relevant to claim | CLASSIFICATION OF THE APPLICATION (Int. Cl.4) |
|---|---|---|---|
| A | FR-A-1 506 936 (VARTA)<br>* Page 1, left-hand column; right-hand column: paragraphs 1-3 *<br>--- | 1,6,10 -14 | |
| A | US-A-4 119 767 (FRITZ BECK)<br>* Column 1, lines 59-68; column 3, lines 29-41 *<br>----- | 1,6,11 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 12-09-1985 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82